# EUROPÄISCHE PATENTSCHRIFT

(11) **EP 0 393 155 B1**
(45) Veröffentlichungstag und Bekanntmachung des Hinweises auf die Patenterteilung: **15.12.1993**
(21) Anmeldenummer: 89903997.8
(22) Anmeldetag: 25.03.1989
(51) Int. Cl.: G03B 21/44, G03B 1/24

(54) **FILMTRANSPORTVORRICHTUNG**
FILM TRANSPORT DEVICE
DISPOSITIF D'AVANCEMENT DU FILM

(30) Priorität: 30.03.1988 DE 3810815; 30.03.1988 DE 3810814
(43) Veröffentlichungstag der Anmeldung: 24.10.1990
(73) Patentinhaber: ARNOLD & RICHTER CINE TECHNIK GMBH & CO. BETRIEBS KG., D-80799 München (DE); ARRI CINE & VIDEO GERÄTE GESELLSCHAFT M.B.H., A-1150 Wien (AT)
(72) Erfinder: BLASCHEK, Otto, D-8011 Aschheim (DE)
(74) Vertreter: Ninnemann, Detlef, Dipl.-Ing.
(86) Internationale Anmeldenummer: DE8900198
(87) Internationale Veröffentlichungsnummer: WO8909430

(56) Entgegenhaltungen:
- DE-A- 3 217 014
- FR-A- 2 371 701
- US-A- 4 215 921

## Beschreibung

Die Erfindung betrifft eine Filmtransportvorrichtung der im Oberbegriff des Anspruchs 1 angegebenen Art.

Aus der DE-PS 27 22 378 ist eine Filmtransportvorrichtung mit einer von einem Antriebsmotor intermittierend angetriebenen Filmtransportzahnrolle bekannt, deren Zähne mit Spiel in die Perforation des Filmes eingreifen und diesen schrittweise transportieren. Eine Steuervorrichtung steuert den Antriebsmotor der Filmtransportzahnrolle so an, daß dieser den Film um jeweils eine Bildbreite vorschiebt. Der Transportvorgang wird durch ein dem Antriebsmotor der Filmtransportzahnrolle zugeführtes Stromprofil bei jedem Bildschritt in eine Beschleunigungsphase, in eine Bremsphase und in eine Endpositionierungsphase unterteilt.

Zur Endpositionierung ist ein Markierungsdetektor vorgesehen, der in fester räumlicher Beziehung zu den einzelnen Filmbildern stehende Markierungen auf dem Film abtastet und daraus Steuersignale für den Antriebsmotor erzeugt, so daß der Film je nach Lage der Abweichung der filmfesten Markierung von einer vorgegebenen Sollposition weiter vorwärts oder rückwärts transportiert wird. Daran anschließend wird die Abweichung von der Sollposition erneut detektiert und ggf. das Endpositionieren des Film wiederholt, bis die Sollposition erreicht ist. Als filmfeste Markierung dienen die Perforationslöcher des Films oder auf den Film aufbelichtete Markierungen.

Bei der bekannten Filmtransportvorrichtung erfolgt zwar die Schrittsteuerung des Antriebsmotors für die Filmtransportzahnrolle mit hoher Präzision, wegen des unvermeidlichen Spiels beim Eingriff der Zähne in die Filmperforation treten jedoch Positionierungsungenauigkeiten auf, die dazu führen, daß die Filmbilder nicht exakt vor dem Bildfenster plaziert werden.

Eine ständige Abweichung des Bildstrichs von der exakten Lage vor dem Bildfenster könnte zwar ausgeregelt werden, aufgrund der Differenz der Zahndicke zur Perforationsweite ist jedoch keine konstante Abweichung gegeben, sondern ein ständiges Variieren des Bildstrichs vor dem Bildfenster möglich.

Aus der DE-OS 28 18 910 ist ein Verfahren und eine Vorrichtung zum intermittierenden Transport eines Films mittels eines mit einem Schrittmotor verbundenen Zahnrades bekannt, dessen Zähne in die Perforation des Films zum schrittweisen Fortschalten des Films eingreifen. Bei der bekannten Vorrichtung wird der Film längs einer flachen Anlageplatte geführt, die mit einem Projektionsfenster versehen ist, das zwischen einer Lichtquelle und einer Projektionsoptik angeordnet ist. Zusätzlich kann ein Element vorgesehen werden, das den Film gegen die Anlageplatte in die Position drückt, in der er mit dem Zahnrad in Eingriff kommt. Zusätzlich besteht bei der bekannten Vorrichtung die Möglichkeit, den Film um das Zahnrad herum zu führen.

Auch bei dieser bekannten Vorrichtung erfolgt zwar die Schrittsteuerung des Schrittmotors mit hoher Präzision, jedoch treten wegen des unvermeidlichen Spiels beim Eingriff der Zähne des Zahnrades in die Filmperforation Positionierungsungenauigkeiten auf, die dazu führen, daß die Filmbilder nicht exakt vor dem Bildfenster plaziert werden, was ein ständiges Variieren des Bildstrichs vor dem Bildfenster zur Folge hat.

Aus der DE-OS 32 17 014 ist eine Filmtransportvorrichtung mit einem von einem Antriebsmotor angetriebenen Greiferschaltwerk bekannt, dessen Transport- und Sperrgreifer mit Spiel in die Perforation des Filmes eingreifen und den Film schrittweise um jeweils eine Bildbreite vorschieben und am Bildfenster endpositionieren. Die Endpositionierung der zu projizierenden Filmbilder erfolgt entweder unter Verwendung des wiederzugebenden Filmbildes selbst oder unter Verwendung einer dem Filmbild zugeordneten Referenzmarkierung.

Im Falle einer Abweichung des Einzelbildes des Films im Bildfenster von einer vorgegebenen Sollage wird mittels eines Sensors ein Signal abgegeben, mit dem die Abweichung korrigiert wird, indem jeweils eins von zwei keilförmigen Justierelementen in Richtung auf den Film bewegt wird und somit eine Verschiebung des Films in Filmtransportrichtung oder entgegen der Filmtransportrichtung bewirkt.

Aus dem DE-GM 18 91 272 ist eine Vorrichtung zum Andrücken von Filmen im Filmkanal eines Filmprojektors mit Greiferschaltwerk bekannt, bei der am Boden des Filmkanals symmetrisch in Filmlaufrichtung zwei Führungskufen starr und an der Innenseite der Filmbahntür für jede Führungskufe mindestens zwei in Filmlaufrichtung hintereinanderliegende Andruckkufen einzeln federnd montiert angeordnet sind. Bei geschlossener Filmbahntür drücken die Andruckkufen den durchlaufenden Film an die Führungskufen und klemmen den Film gegen das Bildfenster.

Der vorliegenden Erfindung liegt die Aufgabenstellung zugrunde, die gattungsgemäße Filmtransportvorrichtung im Hinblick auf eine genauere Endpositionierung der zu projizierenden Filmbilder zu verbessern.

Diese Aufgabe wird durch das kennzeichnende Merkmal des Anspruchs 1 gelöst.

Die erfindungsgemäße Lösung schafft eine Filmtransportvorrichtung mit verbesserter Endpositionierung der zu projizierenden Filmbilder.

Dabei geht die erfindungsgemäße Lösung von der Erkenntnis aus, daß bei einer festen räumlichen Zuordnung zwischen der Filmtransportvorrichtung und dem durch die Filmtransportvorrichtung bewegten Film auch unter Berücksichtigung eines unvermeidlichen Spiels zwischen der Filmperforation und der in die Filmperforation eingreifenden Zähne einer Filmtransportzahnrolle ein exaktes Positionieren jedes Filmbildes vor dem Bildfenster sichergestellt ist. Eine derartige feste räumliche Zuordnung ist dann gegeben, wenn ein Zahn der Filmtransportzahnrolle spielfrei an der Vorder- oder Hinterkante eines Perforationslochs der Filmperforation im Augenblick der Projektion eines Filmbildes anliegt.

Wird auf diese Weise festgelegt, welcher Zahn der Filmtransportzahnrolle an der Vorder- oder Hinterkante eines Perforationsloches der Filmperforation anliegt, kann die Bewegung der Filmtransportzahnrolle so gesteuert werden, daß der Abstand zwischen der vorderen oder hinteren Flanke dieses Zahns und dem Bildfenster für ein bildstrichgenaues Einstellen des jeweiligen Filmbildes vor dem Bildfenster festgelegt ist.

In einer vorteilhaften Weiterbildung der Erfindung wird die Bewegung des Films durch das Gleitverhalten des Films im Filmkanal im Bereich des Bildfensters eingestellt. Das Gleitverhalten des Films kann sowohl durch eine erhöhte oder verringerte mechanische Reibung des Films im Filmkanal als auch durch die Art und Weise des intermittierenden Transports des Films in den Bewegungsphasen zwischen den einzelnen Bildständen erfolgen.

Demzufolge besteht ein weiterführendes Merkmal der erfindungsgemäßen Lösung darin, daß die Abbremsung des Films in der Abbremsphase so groß ist, daß der Film in einer anschließenden Nachlaufregelung vor der Projektion eines Filmbildes an der vorderen Flanke mindestens eines Zahns der Filmtransportzahnrolle anliegt oder daß die Verzögerung des Films in der Abbremsphase so gering ist, daß in einer anschließenden Nachlaufregelung des Films vor der Projektion eines Filmbildes die hintere Flanke mindestens eines Zahns der Filmtransportzahnrolle an der Vorderkante eines Perforationslochs der Filmperforation anliegt.

Eine Weiterbildung der erfindungsgemäßen Lösung besteht darin, daß der Film im Bereich des Bildfensters zwischen einer das Bildfenster aufweisenden Filmkanalwand und einer beweglichen Andückplatte geführt ist und daß die Andruckkraft der Andrückplatte in Bezug auf die Filmkanalwand einstellbar ist.

Eine vorteilhafte Weiterbildung dieser Vorrichtung ist dadurch gekennzeichnet, daß die Andrückplatte in einer zum Öffnen und Schließen des Filmkanals beweglichen Filmbühne gelagert ist und daß der Abstand zwischen Andrückplatte und Filmbühne einstellbar ist, wobei vorzugsweise die Andrückplatte in der Filmbühne federnd gelagert ist und die Federkraft einstellbar ist.

Eine weitere vorteilhafte Weiterbildung der Erfindung ist dadurch gekennzeichnet, daß der Umschlingungswinkel des Films um die Filmtransportzahnrolle veränderbar ist. Auf diese Weise können Filme mit unterschiedlichen Perforationsbreiten exakt positioniert werden, indem je nach Perforationsbreite das Einspannen des Films zwischen zwei unterschiedlich beabstandeten Zähnen der Filmtransportzahnrolle erfolgt.

Eine vorteilhafte Ausgestaltung dieser erfindungsgemäßen Lösung ist dadurch gekennzeichnet, daß der Film zwischen einer Filmkufe und der Filmtransportzahnrolle geführt ist, wobei die Filmkufe einen dem Radius der Filmtransportzahnrolle angepaßte Ausnehmung aufweist und daß die Länge der Ablaufkante in der Filmkufe veränderbar ist. Auf diese Weise wird der Film über eine größere oder kleinere Anzahl Zähne der Filmtransportzahnrolle zwangsgeführt und damit erreicht, daß je nach Perforationsbreite des Films eine unterschiedliche Zähnezahl im Eingriff ist bzw. der Film zwischen zwei unterschiedlich beabstandeten Zähnen eingespannt wird.

Eine weitere vorteilhafte Ausgestaltung der erfindungsgemäßen Lösung zum Transport eines zwei gleichmäßig geteilte Perforationsreihen aufweisenden Films mit einer Filmtransportzahnrolle, die zwei auf einer Achse befestigte Zahnkränze aufweist, ist dadurch gekennzeichnet, daß die Zahnkränze gegeneinander verstellbar sind, so daß insbesondere die Zahnkränze in der senkrechten Projektion eine unterschiedliche Stellung der Zähne aufweisen.

Gegenüber dem Normalfall, wo die obere und untere Verzahnung einer Filmtransportzahnrolle deckungsgleich ausgeführt ist, kann bei diesem Ausführungsbeispiel die Parallellage der einzelnen Zähne des oberen und unteren Zahnkranzes durch Verdrehen verstellt werden. Dadurch können sowohl Herstellungsfehler bei der Filmtransportzahnrolle, die bereits durch Fertigungstoleranzen bedingt sind, sowie eine Schrumpfung des Filmes ausgeglichen, ein Geräusche verursachendes Spiel zwischen der Filmperforation und den Zahnkränzen vermieden und zusätzlich der geforderte exakte Bildstand erzielt werden. Zusätzlich dient diese Maßnahme zum Ausgleich bei abwechselnder Projektion von positiv- und negativperforiertem Film.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine schematische perspektivische Darstellung des Filmkanals mit den einzelnen Antriebsteilen;
- Figur 2: einen Querschnitt durch eine Filmtransportvorrichtung mit einer Filmtransportzahnrolle;
- Figur 3: eine Draufsicht auf eine in eine Filmperforation eingreifende Zahnreihe einer Filmtransportzahnrolle;
- Figur 4: eine schematische Abwicklung der in die Filmperforation eingreifenden Zähne der Filmtransportzahnrolle;
- Figur 5: eine zeitliche Darstellung des Transportprofils mit Nachlaufregelung;
- Figur 6: eine Seitenansicht der Filmbühne mit Filmführungsplatte und Filmtransportzahnrolle;
- Figur 7: eine Seitenansicht eines in der Filmbühne gelagerten Andruckrahmens;
- Figur 8: eine Draufsicht auf die Filmbühne und Andruckrahmen sowie Filmtransportzahnrolle;
- Figur 9: gestrichen;
- Figur 10: eine schematische Draufsicht auf eine Filmkufe mit veränderbarer Ablaufkante und einer von der Filmkufe beabstandeten Filmtransportzahnrolle und
- Figur 11: eine schematische Abwicklung der in die Filmperforationen eingreifenden Zähne eines oberen und unteren Zahnkranzes der Filmtransportzahnrolle.

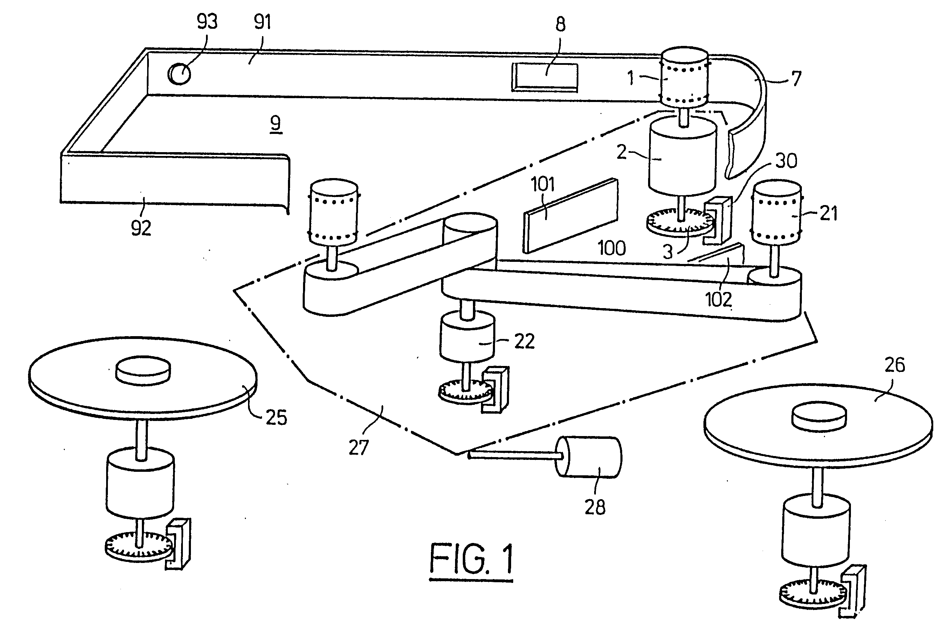

Die in Figur 1 dargestellte schematische perspektivische Ansicht des Filmkanals eines Filmprojektors zeigt eine Filmtransporteinrichtung mit einer Filmtransportzahnrolle 1, einem Antriebsmotor 2 und einer Winkelgeberscheibe 3, die Vor- und Nachwickeleinrichtungen 20, 21, die von einer gemeinsamen Antriebseinrichtung 22 angetrieben werden, die die Filmspulen tragenden Wickeleinrichtungen 25, 26 sowie in vereinfachter schematischer perspektivischer Darstellung die zur Aufnahme der Filmschleifen zu beiden Seiten des Bildfensters 8 dienenden Filmschleifenkanäle 9, 100.

Der aus einem hochdynamischen Gleichstromservomotor bestehende Antriebsmotor 2 überträgt seine Drehbewegung über die direkt angetriebene Filmtransportzahnrolle 1 auf den Film. Über eine Welle ist der Antriebsmotor 2 fest mit der Winkelgeberscheibe 3 verbunden, so daß mittels einer optoelektronischen Positions-Abtasteinrichtung die exakte Stellung des Antriebsmotors 2 erfaßt und weitergeleitet werden kann.

Die Filmschleifenkanäle 9, 100 dienen zur Aufnahme der zu beiden Seiten des Bildfensters 8 gebildeten Filmschleifen, wobei eine Schleifenmeßeinrichtung 93 in dem links vom Bildfenster 8 angeordneten Filmschleifenkanal 9 vorgesehen ist. Die Schleifenmeßeinrichtung 93 kann aus einer Reflektionslichtschranke oder einer Leuchtdiode in Verbindung mit einem gegenüberliegenden Fototransistor bestehen.

Der Filmschleifenkanal 9 wird durch zwei Filmschleifenkanalwände 91, 92 gebildet, wobei die eine Filmschleifenkanalwand 91 das Bildfenster 8 enthält und im Bereich der Filmtransportzahnrolle 1 als Filmkufe 7 ausgebildet ist, die den Film um die Filmtransportzahnrolle lenkt.

Ein in entsprechenden Führungen gelagerter Zustellschlitten 27 wird von einem Zustellmotor 28 angetrieben und trägt die Abbildungsoptik, die Filmtransporteinrichtung einschließlich einer Filmbühne mit Filmandrückplatte, die Vor- und Nachwickeleinrichtungen 20, 21, eine Schwenkkufe sowie die Antriebseinrichtung 22.

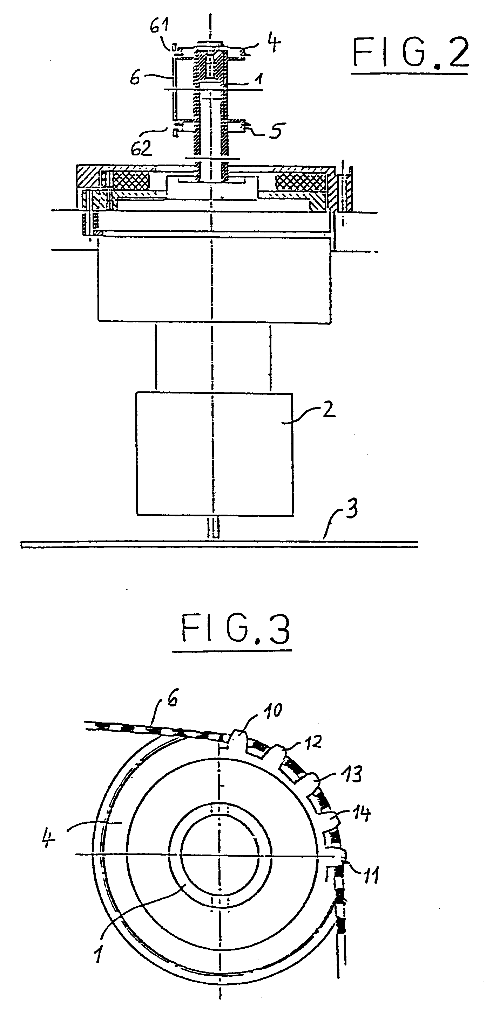

Der in Figur 2 dargestellte Querschnitt durch eine Filmtransporteinrichtung zeigt eine mit 2 Zahnkränze 4, 5 versehene Filmtransportzahnrolle, die fest mit der Welle eines Antriebsmotors 2 gekoppelt ist, auf dessen Welle auch eine Winkelgeberscheibe 3 zur exakten Positionierung des Antriebsmotors 2 angeordnet ist. Der obere und untere Zahnkranz 4, 5 der Filmtransportzahnrolle 1 greift in entsprechende Perforationsreihen 61, 62 eines Films 6 ein, wobei der Eingriff durch eine nicht näher dargestellte Führung in Form einer Filmkufe oder dergleichen herbeigeführt wird. Dabei erfolgt der Eingriff der Zähne der Filmtransportzahnrolle in die Filmperforation über einen von der Filmbahn abhängigen Umfangsbereich der Filmtranportzahnrolle, so daß mehrere Zähne jedes Zahnkranzes 4, 5 der Filmtransportzahnrolle 1 gleichzeitig in entsprechende Perforationslöcher der Filmperforation eingreifen. Üblicherweise greifen gleichzeitig 4 bis 6 Zähne der Filmtransportzahnrolle 1 in die Filmperforation ein.

Der Eingriff der Zähne der Filmtransportzahnrolle 1 in die Filmperforation erfolgt dabei unter Einhaltung eines bestimmten Spiels, d.h., die Zahndicke der Zähne der Filmtransportzahnrolle 1 ist geringer als die Perforationsweite. Auf diese Weise wird vermieden, daß die Zähne der Filmtransportzahnrolle 1 an den Perforationsflanken beidseitig anliegen, was wegen der Filmspannung zu einer Beschädigung der Filmperforation und zu einem erhöhten Geräuschpegel führen würde. Dieses Spiel zwischen den Zähnen der Filmtransportzahnrolle 1 und der Filmperforation führt aber auch bei Einhaltung einer vorbestimmten Filmspannung zu ungenauer Positionierung der einzelnen Filmbilder vor dem Bildfenster 8, so daß der Vorteil einer exakten Positionierung mit Hilfe eines Winkelgebersystems für den Antriebsmotor 2 durch diese ungenaue Führung des Films 6 beseitigt wird.

Um die genaue Positionierung des Films, die durch die Verwendung eines Antriebsmotors für die Filmtransportzahnrolle mit einem Winkelgebersystem geschaffen wird, auf die Positionierung des Films vor dem Bildfenster zu übertragen, wird die Bewegung des Films 6 vor der Projektion eines Filmbildes so eingestellt, daß die in Drehrichtung der Filmtransportzahnrolle 1 vordere oder hintere Flanke eines Zahns 10 bis 14 der Filmtransportzahnrolle 1 gemäß Figur 3 an der Vorder- oder Hinterkante mindestens eines Perforationslochs der Filmperforation im Augenblick der Projektion eines Filmbildes anliegt.

In Figur 3 handelt es sich hierbei um den an der Eingriffsgrenze liegenden Zahn 11, der an der Vorderflanke eines entsprechenden Perforationsloches der Filmperforation des Films 6 anliegt.

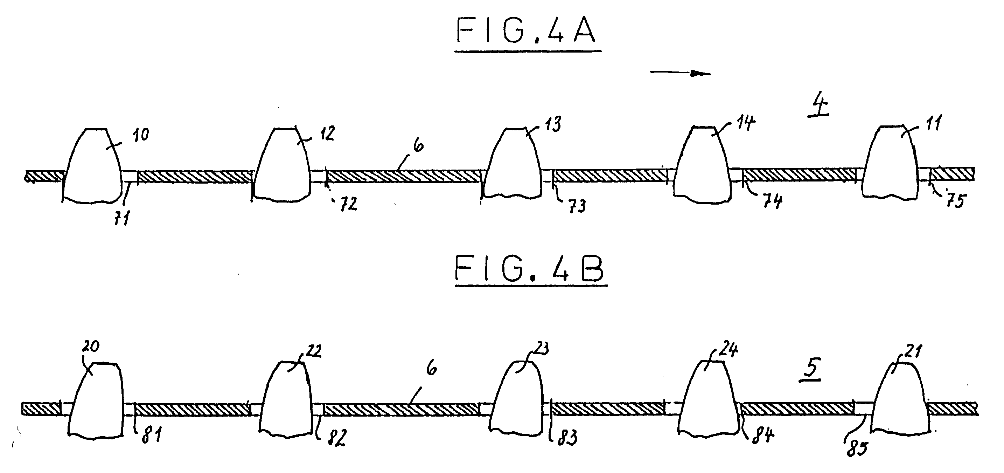

Figur 4 verdeutlicht in einer Abwicklung des Eingriffsbereiches der Zähne der Filmtransportzahnrolle in die Filmperforation das erfindungsgemäße Prinzip.

In Figur 4 A liegt bei einer durch den Pfeil angedeuteten Transportrichtung des Films die Hinterkante des Zahns 10 der Filmtransportzahnrolle an der hinteren Flanke des Perforationsloches 71 der Filmperforation an, während die weiteren im Eingriff mit der Filmperforation befindlichen Zähne 11 bis 14 der Filmtransportzahnrolle mit Spiel in die Perforationslöcher 72 bis 75 eingreifen. Auf diese Weise wird der Film 6 in seiner Lage festgelegt, so daß eine genaue Positionierung der einzelnen Filmbilder vor dem Bildfenster entsprechend der exakten Positionierung des Antriebsmotors sichergestellt wird. Gleichzeitig wird vermieden, daß sämtliche in Eingriff stehende Zähne an den Perforationsrändern entlanggleiten und somit die Filmperforation vorzeitig verschleißen bzw. unerwünschte Geräusche erzeugen.

In Figur 4 B liegt bei der durch den Pfeil angedeuteten Transportrichtung des Films die Vorderkante des Zahns 21 der Filmtransportzahnrolle an der vorderen Flanke des Perforationsloches 85 der Filmperforation an, während die weiteren im Eingriff mit der Filmperforation befindlichen Zähne 20 bis 24 der Filmtransportzahnrolle mit Spiel in die Perforationslöcher 81 bis 84 eingreifen. Auch hier wird der Film 6 in seiner Lage festgelegt, so daß eine genaue Positionierung der einzelnen Filmbilder vor dem Bildfenster entsprechend der exakten Positionierung des Antriebsmotors sichergestellt wird. Gleichzeitig wird vermieden, daß sämtliche in Eingriff stehende Zähne an den Perforationsrändern entlanggleiten und somit die Filmperforation vorzeitig verschleißen bzw. unerwünschte Geräusche erzeugen.

Die Festlegung, welcher der in Eingriff mit der Filmperforation stehenden Zähne der Filmtransportzahnrolle an der Vorderoder Hinterflanke der Filmperforation anliegt erfolgt wahlweise oder in Kombination durch die Steuerung des Transportprofils und durch das Gleitverhalten des Films im Filmkanal.

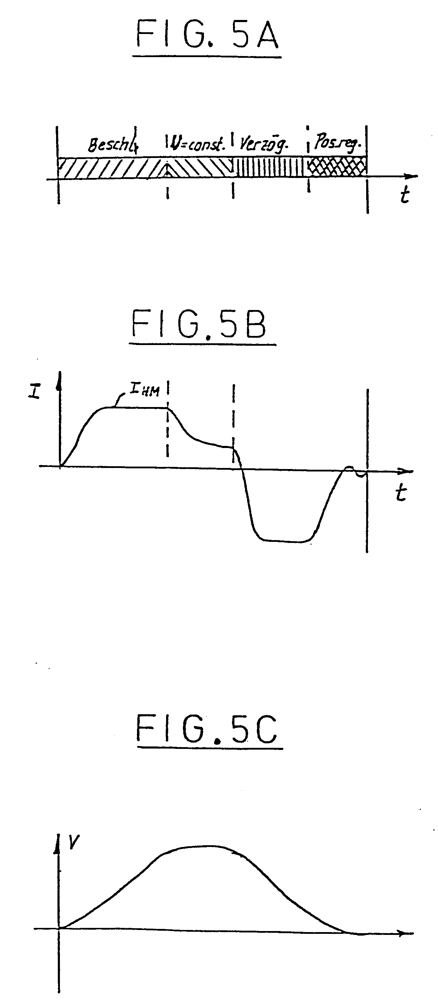

Zur Verdeutlichung der Funktionsweise des erfindungsgemäßen Verfahrens ist in Figur 5 der zeitliche Verlauf der Steuersignale für den Hauptmotor, des Motorstroms und der Filmgeschwindigkeit dargestellt.

Figur 5 A zeigt die einzelnen Motorsteuersignale, deren Zeitdauer durch die einzelnen Winkelgebermeßpunkte zuzüglich der durch Zeitglieder vorgegebenen Zeitverzögerungen bemessen ist. Die einzelnen Bewegungsabschnitte des Hauptmotors und damit des Films setzen sich aus einer Beschleunigungs-, Gleichlauf- und Bremsphase sowie einer Endpositionierungsphase in der das jeweils zu positionierende Filmbild bildstrichgenau vor dem Fenster positioniert wird, zusammen. Diese genaue Positionierung erfolgt mit Hilfe der Winkelgeberscheibe, so daß eine Messung und Regelung der Filmlage über eine Detektierung einer Filmmarke, bspw. durch Perforationslesung nicht notwendig ist.

Figur 5 B zeigt den Verlauf des Motorstroms und damit des Drehmoments des Hauptmotors 2 in der Beschleunigungs-, Gleichlauf- und Bremsphase sowie der Endpositionierungsphase.

Figur 5 C zeigt das Geschwindigkeitsprofil über einen Bildschritt und verdeutlicht die parabelförmige und damit sanft ansteigende Geschwindigkeit in der Beschleunigungs- und die sanft abfallende Geschwindigkeit in der Verzögerungs- und Endpositionierungsphase.

Erfindungsgemäß wird nun das Transportprofil so eingestellt, daß zu Beginn der Positionsregelphase die Geschwindigkeit des Films größer Null ist und in der Positionsregelphase der Film "abgebremst" wird, indem die Hinterkante eines Zahns der Filmtransportzahnrolle an der Hinterflanke eines Perforationsloches anliegt oder daß zu Beginn der Positionsregelphase die Geschwindigkeit des Films gleich Null ist und in der Positionsregelphase der Film in die richtige Bildlage "gezogen" wird, indem die Vorderkante eines Zahns der Filmtransportzahnrolle an der Vorderflanke eines Perforationsloches anliegt.

Durch entsprechendes Einstellen des Transportprofils können somit definierte Verhältnisse bei der bildstrichgenauen Positionierung des Films geschaffen werden.

Alternativ hierzu oder ergänzend kann das Gleitverhalten des Films im Filmkanal beeinflußt werden, so daß der Film in der Endpositionierungsphase entweder abgebremst oder in die richtige Lage vor das Bildfenster gezogen wird. Zu diesem Zweck werden die Reibungsverhältnisse im Filmkanal entsprechend eingestellt.

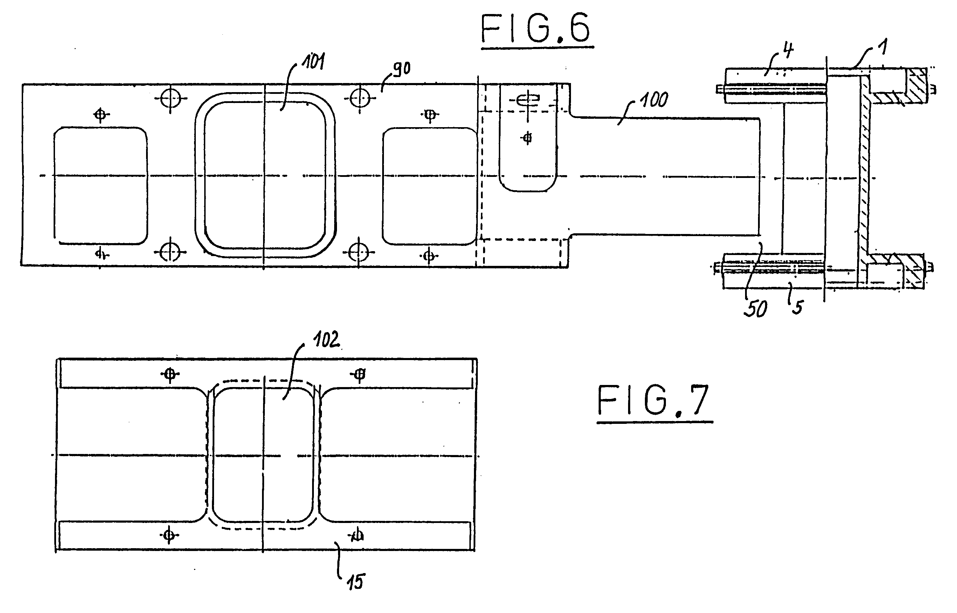

In Figur 6 ist eine Seitenansicht der Filmbühne 90 dargestellt, die den Film im geschlossenen Zustand des Filmkanals gegen eine das Bildfenster zum Projizieren von Filmbildern enthaltende Filmkanalwand drückt.

Zu diesem Zweck ist in der Filmbühne ein in Figur 7 in Seitenansicht dargestellter Andruckrahmen 15 federnd gelagert. Filmbühne 90 und Andruckrahmen 15 weisen fensterförmige Öffnungen 101, 102 auf, wobei die fensterförmige Öffnung 102 des Andruckrahmens 15 dem Bildformat des Films entspricht.

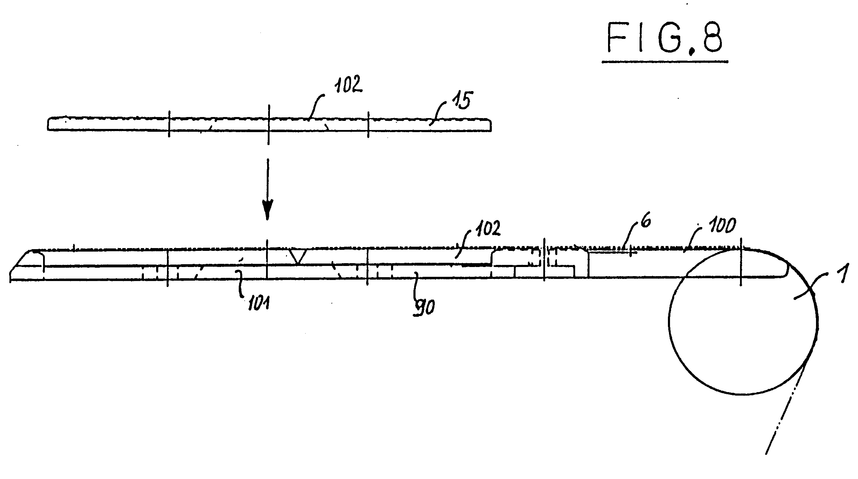

Auf der Seite der Filmtransportzahnrolle 1 ist die Filmbühne 90 mit einer Filmführungsplatte 100 versehen, die in einer Ausnehmung 50 zwischen die Zahnkränze 4,5 der Filmtransportzahnrolle 1 eingreift. Die Form des Eingriffs ist der Darstellung gemäß Figur 8 zu entnehmen.

Figur 8 zeigt in Draufsicht die Filmbühne 90, die eine Ausnehmung 102 aufweist, in der der Andruckrahmen 15 federnd gelagert ist. Der Andruckrahmen 15 drückt im geschlossenen Zustand des Filmkanals den strichpunktiert eingetragenen Film 6 gegen die nicht näher dargestellte Filmkanalwand, wobei beim intermittierenden Transport des Films mittels der Filmtransportzahnrolle 1 jeweils ein vor dem Bildfenster der Filmkanalwand befindliches Filmbild durch die Öffnungen 101, 102 der Filmbühne bzw. des Andruckrahmens von einer Projektionslampe belichtet wird.

Die Filmführungsplatte 100 greift so in die Ausnehmung 50 zwischen den Zahnreihen 4,5 der Filmtransportzahnrolle 1 ein, daß sie dem Radius der Filmtransportzahnrolle 1 angepaßt ist und so eine lückenlose Umlenkung des Films zwischen Filmbühne und Andruckrahmen, Filmkanalwand, Filmtransportzahnrolle und Filmandrückkufe 7 ermöglicht.

Durch eine exakte Einstellung des Abstandes zwischen Andruckrahmen 15 und Filmbühne 90 kann der Druck auf den zwischen Andruckrahmen 15 und Filmkanalwand hindurchgleitenden Film festgelegt und damit die Reibungsverhältnisse bestimmt werden.

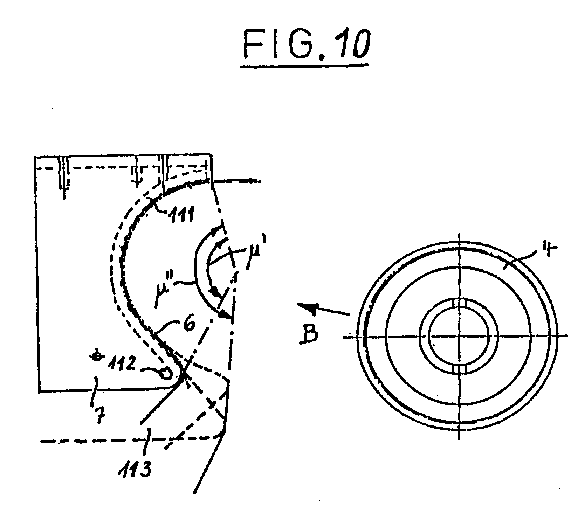

Um die genaue Positionierung des Films, die durch die Verwendung eines Antriebsmotors für die Filmtransportzahnrolle mit einem Winkelgebersystem geschaffen wird, auf die Positionierung des Films vor dem Bildfenster zu übertragen, wird gemäß Figur 9 die Zahnteilung der Filmtransportzahnrolle gegenüber der Teilung der Filmperforation so verändert, daß die jeweils rechte bzw. linke Zahnflanke zweier im Eingriffsbereich der Zähne der Filmtransportzahnrolle in die Filmperforation liegender und voneinander beabstandeter Zähne an der Vor-der- bzw. Hinterkante zweier entsprechender Perforationslöcher der Filmperforation anliegen.

Gemäß Figur 3 handelt es sich hierbei um die an den Eingriffsgrenzen liegenden Zähne 10 und 11, die an den Vor-der- bzw. Hinterflanken entsprechender Perforationslöcher der Filmperforation des Films 6 mit ihrer rechten bzw. linken Zahnflanke anliegen, während die dazwischenliegenden Zähne mit beidseitigem Spiel in die Perforationslöcher eingreifen.

Die Profilverschiebung wird vorteilhafterweise von dem Durchmesser der Filmtransportzahnrolle in der Weise abhängig gemacht, daß sie mit steigendem Durchmesser ansteigt. So beträgt bei einer Filmtransportzahnrolle mit einem Durchmesser von 30,17 mm die Profilverschiebung x = 0,02 mm, während sie bei einer Filmtransportzahnrolle mit einem Durchmesser von 30,43 mm x = 0,06 mm beträgt.

Das Zahnprofil selbst wird vorteilhafterweise nach DIN 15530 Teil 1 ausgebildet, was einen besonders schonenden Eingriff in die Filmperforation und eine geringe Geräuschbildung sicherstellt.

Da es Filme mit unterschiedlicher Breite der Perforationslöcher (Negativmaterial mit einer Perforationsbreite von 1,85 mm und Positivmaterial mit einer Perforationsbreite von 1,98 mm) bei gleichem Abstand der Perforationen von 4,74 mm gibt, könnte das Einspannen des Films zwischen zwei beabstandeten Zähnen der Filmtransportzahnrolle 1 nur für eine Materialart angewendet werden.

In Weiterbildung der Erfindung wird daher der Umschlingungswinkel des Films um die Filmtransportzahnrolle veränderbar ausgeführt, so daß in Abhängigkeit von der Perforationsbreite des betreffenden Films mehr oder weniger Zähne der Filmtransportzahnrolle in Eingriff sind und der Film zwischen den Zahnflanken unterschiedlich beabstandeter Zähne der Filmtransportzahnrolle eingespannt wird.

In Figur 10 ist schematisch eine Draufsicht auf eine Filmkufe 7 mit veränderbarer Ablaufkante 113 und eine Filmtransportzahnrolle 1 dargestellt, die beim Schließen des Filmkanals in Pfeilrichtung B in die Ausnehmung 111 der Filmkufe 7 eingreift, so daß der Film 6 zwischen Filmkufe 7 und Filmtransportzahnrolle 1 geführt wird.

Durch die Veränderung der Länge oder des Neigungswinkels der ablaufenden Kante 113 der Filmkufe wird der Umschlingungswinkel µ des Films 6 um die Filmtransportzahnrolle 1 verändert, so daß bspw. bei Verwendung eines Negativfilms mit einer Perforationsbreite von 1,85 mm ein geringerer Umschlingungswinkel µ' gegeben ist als der Umschlingungswinkel µ'' bei Verwendung eines Positivmaterials mit einer Perforationsbreite von 1,98 mm.

Die Verlängerung der ablaufenden Kante 113 der Filmkufe 7 kann durch An- und Abklappen eines Verlängerungsteils im Bereich eines schematisch dargestellten Gelenkpunktes 112 erfolgen. Alternativ hierzu kann die ablaufende Kante 113 teleskopartig aus der Filmkufe 7 ausgefahren werden, wenn ein größerer Umschlingungswinkel um die Filmtransportzahnrolle gefordert wird.

Bei Verwendung eines Films mit zwei voneinander beabstandeten Perforationsreihen, zwischen denen die Filmbilder angeordnet sind, kann sowohl nur eine als auch beide Perforationsreihen "eingespannt" werden, indem die Zahnteilung nur einer Zahnreihe 4 bzw. 5 gemäß Figur 2 oder die Zahnteilung beider Zahnreihen 4, 5 gegenüber der Teilung der Filmperforation verändert wird.

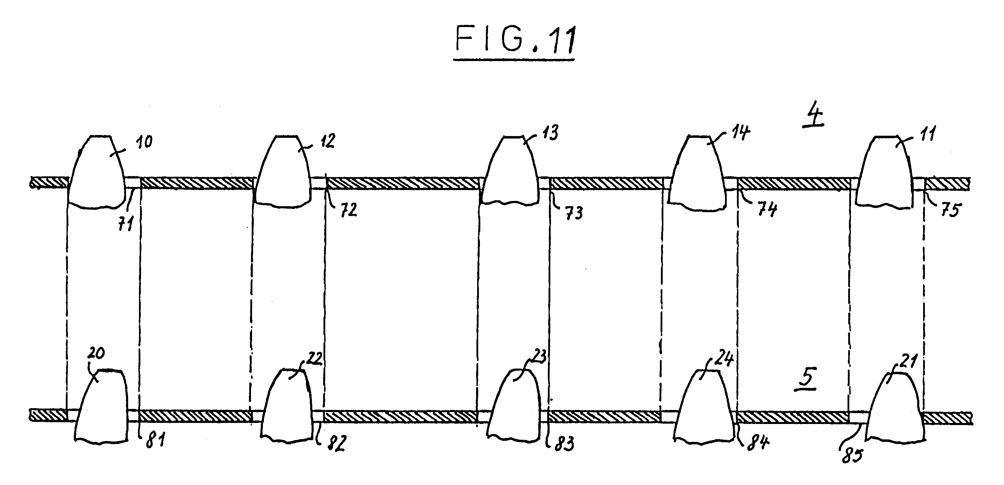

Figur 11 zeigt eine schematische Abwicklung der in die Filmperforation eingreifenden Zähne eines oberen und unteren Zahnkranzes 4, 5 der Filmtransportzahnrolle. Nach einem weiteren Merkmal der Erfindung sind die beiden Zahnkränze 4, 5 gegeneinander verstellbar, so daß die im Normalfall dekkungsgleiche Ausführung der oberen und unteren Verzahnung einer Filmtransportzahnrolle in der senkrechten Projektion eine unterschiedliche Stellung der Zähne des oberen und unteren Zahnkranzes aufweist.

Die Zähne des oberen und unteren Zahnkranzes 4, 5 greifen analog zu den vorstehend beschriebenen Ausführungsbeispielen in die Filmperforationen ein, wobei die rechte Zahnflanke des ersten und die linke Zahnflanke des letzten sich im Eingriff befindlichen Zahnes der jeweiligen Zahnkränze 4, 5 spielfrei an der Vorder- bzw. Hinterkante der jeweiligen Perforationslöcher anliegen.

In Figur 11 greifen die Zähne 10 bis 14 des oberen Zahnkranzes 4 analog zur Darstellung gemäß Figur 9 in die Perforationslöcher 71 bis 75 der einen Perforationsreihe des Filmes ein, während die Zähne 20 bis 24 des unteren Zahnkranzes 5 in die Perforationslöcher 81 bis 85 der anderen Perforationsreihe des Films eingreifen. Zur Verdeutlichung der Lage der einzelnen Zähne des oberen und unteren Zahnkranzes ist gestrichelt die Lage der Zähne des oberen Zahnkranzes 4 auf die Lage der Zähne des unteren Zahnkranzes 5 übertragen, wodurch die Abweichung der Stellung der Zähne des oberen und unteren Zahnkranzes 4, 5 verdeutlicht wird.

Während die linke Flanke des Zahnes 10 des oberen Zahnkranzes 4 spielfrei an der Kante des Perforationsloches 71 anliegt und der Zahn 11 des oberen Zahnkranzes 4 mit seiner rechten Zahnflanke an der Kante des Perforationsloches 75 anliegt, liegt in dem dargestellten Augenblick des Filmtransports lediglich die rechte Zahnflanke des Zahnes 24 des unteren Zahnkranzes 5 spielfrei an der Flanke des Perforationsloches 84 der anderen Perforationsreihe des Filmes an. Durch entsprechendes Verstellen des oberen Zahnkranzes 4 gegenüber dem unteren Zahnkranz 5 oder umgekehrt können die in Figur 6 dargestellten Verhältnisse beliebig verändert werden, insbesondere kann auch eine deckungsgleiche Verzahnung des oberen und unteren Zahnkranzes 4, 5 hergestellt werden.

Auf diese Weise können bspw. durch Fertigungstoleranzen bedingte Herstellungsfehler bei der Filmtransportzahnrolle sowie eine Schrumpfung des Filmes ausgeglichen werden und ein geräuschursächliches Spiel vermieden sowie der geforderte Bildstand erhalten werden. Gleichzeitig kann der gegenseitigen Verstellbarkeit der Zahnkränze ein Ausgleich bei abwechselnder Projektion von positiv- und negativperforiertem Film geschaffen werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

## Patentansprüche

1. Filmtransportvorrichtung mit einer von einem Antriebsmotor (2) angetriebenen Filmtransportzahnrolle (1), deren Zähne (10 bis 14; 20 bis 24) mit Spiel in die Perforation (71 bis 75; 81 bis 85) des Filmes (6) eingreifen und diesen schrittweise transportieren,
sowie mit einer Steuervorrichtung,
welche den Antriebsmotor (2) der Filmtransportzahnrolle (1) derart ansteuert, daß dieser den Film (6) um jeweils eine Bildbreite vorschiebt und nachfolgend am Bildfenster (102) jedes Filmbild auf gleiche Lage einer filmfesten Markierung, vorzugsweise einer senkrecht zur Transportrichtung liegenden Perforationslochkante, endpositioniert, wobei ein jeder Bildschritt in eine auf den Film (6) einwirkende Beschleunigungsphase, in eine Bremsphase und in eine Endpositionierungsphase zerfällt,
**dadurch gekennzeichnet,**
daß während des gesamten Filmlaufs dem Antriebsmotor (2) ein Stromprofil derart vorgegeben ist, daß am Ende eines jeden Bildschrittes vor der Endpositionierung des Filmbildes, entweder die Zähne der Filmtransportzahnrolle (1) von dem Film (6) überholt werden und daß der Film (6) auf der hinteren Flanke eines bestimmten Zahnes innerhalb der in Eingriff mit der Filmperforation befindlichen Zahnreihe aufläuft und von diesem Zahn bremsend endpositioniert wird, oder der Film (6) von den Zähnen der Filmtransportzahnrolle (1) überholt wird und von der vorderen Flanke eines bestimmten Zahnes innerhalb der in Eingriff mit der Filmperforation befindlichen Zahnreihe gezogen endpositioniert wird.

2. Filmtransportvorrichtung nach Anspruch 1, **dadurch gekennzeichnet,** daß die Abbremsung dem Films (6) in der Bremsphase so groß ist, daß der Film (6) in der anschließenden Endpositionierungsphase an der vorderen Flanke mindestens eines Zahns (10 bis 14, 20 bis 24) der Filmtransportzahnrolle (1) anliegt.

3. Filmtransportvorrichtung nach Anspruch 1, **dadurch gekennzeichnet,** daß die Verzögerung des Films (6) in der Bremsphase so gering ist, daß in der anschließenden Endpositionierungsphase die hintere Flanke mindestens eines Zahns (10 bis 14, 20 bis 24) der Filmtransportzahnrolle (1) an der Vorderkante eines Perforationslochs der Filmperforation anliegt.

4. Filmtransportvorrichtung nach Anspruch 1, **dadurch gekennzeichnet,** daß die Bewegung des Films (6) durch das Gleitverhalten des Films (6) im Filmkanal im Bereich des Bildfensters (8) bestimmt wird.

5. Filmtransportvorrichtung nach Anspruch 4, **dadurch gekennzeichnet,** daß im Bereich des Bildfensters (8) ein von manuell einstellbaren Federn beaufschlagter Andruckrahmen (15) vorgesehen ist, dessen Andruckkraft durch diese Federn vorgebbar ist.

6. Filmtransportvorrichtung nach einem der vorangehenden Ansprüche, **dadurch gekennzeichnet,** daß die Zahnteilung der Filmtransportzahnrolle (1) geringfügig größer ist als die Teilung der Filmperforation.

7. Filmtransportvorrichtung nach einem der vorangehenden Ansprüche, **dadurch gekennzeichnet,** daß der Umschlingungswinkel (µ) des Films (6) um die Filmtransportzahnrolle (1) veränderbar ist.

8. Filmtransportvorrichtung nach Anspruch 7, **dadurch gekennzeichnet,** daß der Film (6) zwischen einer Filmkufe (7) und der Filmtransportzahnrolle (1) geführt ist, wobei die Filmkufe (7) eine dem Radius der Filmtransportzahnrolle (1) angepaßte Ausnehmung (70) aufweist, daß die Länge einer Ablaufkante (73) der Filmkufe (7) veränderbar ist und daß die Ablaufkante (73) der Filmkufe (7) um ein Gelenk (72) klappbar ist.

9. Filmtransportvorrichtung nach einem der vorangehenden Ansprüche für einen zwei voneinander beabstandete Perforationsreihen aufweisenden Film, **dadurch gekennzeichnet,** daß die Zahnteilung nur eines Zahnkranzes (4 bzw. 5) der Filmtransportzahnrolle (1) gegenüber der Teilung der Filmperforation verändert ist, derart, daß der Film (6) einseitig eingespannt wird.

10. Filmtransportvorrichtung nach einem der vorangehenden Ansprüche für einen zwei voneinander beabstandete Perforationsreihen aufweisenden Film, **dadurch gekennzeichnet,** daß die Zahnteilung beider Zahnkränze (4, 5) der Filmtransportzahnrolle (1) gegenüber der Teilung der Filmperforation verändert ist, derart, daß der Film (6) beidseitig eingespannt wird.

11. Filmtransportvorrichtung nach einem der vorangehenden Ansprüche zum Transport eines zwei gleichmäßig geteilte Perforationsreihen aufweisenden Films, **dadurch gekennzeichnet**, daß die Filmtransportzahnrolle (1) zwei auf einer Achse befestigte Zahnkränze (4, 5) aufweist, die gegeneinander verstellbar sind.

## Claims

1. Film transport mechanism with a film transport sprocket wheel (1) driven by a drive motor (2) and whose cogs (10 to 14; 20 to 24) engage with play into the perforation (71 to 75; 81 to 85) of the film (6) so as to transport the film stepwise,
as well as with a control mechanism,
which controls the drive motor (2) of the film transport sprocket (1) so that this advances the film (6) each time by one picture width and then at the film window (102) provides each film image with an end position at the same place at a marking which is fixed relative to the film, preferably an edge of a perforation hole lying perpendicular to the transport direction, wherein each picture step is broken down into an acceleration phase acting on the film (6), into a brake phase and into an end positioning phase,
characterised in that
during the entire running of the film a current profile is passed to the drive motor (2) so that at the end of each picture step before the end positioning of the film image either the cogs of the film transport sprocket (1) are passed by the film (6) and that the film (6) runs onto the rear flank of a specific cog within the row of cogs located in engagement with the film perforation and, braked by the cog, reaches its end position, or the film (6) is covered by the cogs of the film transport sprocket (1) and reaches its end position drawn by the front flank of a specific cog within the row of teeth engaging with the film perforation.

2. Film transport mechanism according to claim 1, characterised in that the braking of the film (6) in the braking phase is so great that the film (6) in the following end positioning phase adjoins the front flank of at least one cog (10 to 14, 20 to 24) of the film transport sprocket (1).

3. Film transport mechanism according to claim 1, characterised in that the delay of the film (6) in the braking phase is so slight that in the following end positioning phase the rear flank of at least one cog (10 to 14, 20 to 24) of the film transport sprocket (1) adjoins the front edge of a perforation hole of the film perforation.

4. Film transport mechanism according to claim 1, characterised in that the movement of the film (6) is determined by the slide behaviour of the film (6) in the film channel in the area of the film window (8).

5. Film transport mechanism according to claim 4, characterised in that in the area of the film window (8) there is a contact pressure frame (15) biased by manually adjustable springs which determine the contact pressure force of the frame.

6. Film transport mechanism according to one of the preceding claims characterised in that the cog spacing of the film transport sprocket (1) is slightly larger than the spacing of the film perforation.

7. Film transport mechanism according to one of the preceding claims characterised in that the looping angle (µ) of the film (6) round the film transport sprocket (1) is variable.

8. Film transport mechanism according to claim 7, characterised in that the film (6) is guided between a film runner (7) and the film transport sprocket (1) wherein the film runner (7) has a recess (70) matching the radius of the film transport sprocket (1), that the length of a delivery edge (73) of the film runner (7) is variable and that the delivery edge (73) of the film runner (7) can be folded round an articulated joint (72).

9. Film transport mechanism according to one of the preceding claims for a film having two spaced rows of perforations, characterised in that the cog spacing of only one spur gear (4 or 5) of the film transport sprocket (1) is changed relative to the spacing of the film perforation so that the film (6) is tensioned on one side.

10. Film transport mechanism according to one of the preceding claims for a film having two spaced rows of perforations, characterised in that the cog spacing of both spur gears (4, 5) of the film transport sprocket (1) is changed relative to the spacing of the film perforation so that the film (6) is tensioned on both sides.

11. Film transport mechanism according to one of the preceding claims for transporting a film having two evenly divided rows of perforations characterised in that the film transport sprocket (1) has two spur gears (4,5) fixed on an axis and displaceable relative to each other.

## Revendications

1. Dispositif d'avancement de film, comportant un rouleau denté d'avancement de film (1) qui est entraîné par un moteur d'entraînement (2) et dont les dents (10 à 14; 20 à 24) pénètrent avec jeu dans la perforation (71 à 75; 81 à 85) du film (6) et font avancer celui-ci pas à pas, et comportant un dispositif de commande qui commande le moteur d'entraînement (2) du rouleau denté d'avancement de film (1) de façon que ce rouleau fasse avancer le film (6) de chaque fois une largeur d'image et positionne finalement ensuite, à la fenêtre d'image (102), chaque image de film dans la même position d'une marque fixée sur le film, de préférence d'une arête d'un trou de perforation située perpendiculairement à la direction de transport, chacun des pas d'image étant divisé en une phase d'accélération agissant sur le film (6), en une phase de freinage et en une phase de positionnement final, caractérisé en ce que, pendant le mouvement complet du film, un profil de courant est donné au préalable au moteur d'entraînement (2) de façon qu'à la fin de chacun des pas d'image, avant le positionnement final de l'image du film, soit les dents du rouleau d'avancement de film (1) sont devancées par le film (6) et le film (6) s'arrête sur le flanc arrière d'une dent déterminée dans la série de dents qui se trouvent en prise avec la perforation du film et est positionné finalement en freinant par cette dent, soit le film (6) est devancé par les dents du rouleau d'avancement de film (1) et est positionné finalement en étant tiré par le flanc antérieur d'une dent déterminée dans la série de dents qui se trouvent en prise avec la perforation du film.

2. Dispositif d'avancement de film suivant la revendication 1, caractérisé en ce que le freinage du film (6) dans la phase de freinage est d'une grandeur telle que le film (6) est appliqué dans la phase suivante de positionnement final sur le flanc antérieur d'au moins une dent (10 à 14, 20 à 24) du rouleau denté d'avancement de film.

3. Dispositif d'avancement de film suivant la revendication 1, caractérisé en ce que le ralentissement du film (6) dans la phase de freinage est tellement faible que, dans la phase de positionnement final suivante, le flanc arrière d'au moins un dent (10 à 14, 20 à 24) du rouleau denté d'avancement de film (1) est appliqué sur l'arête antérieure d'un trou de perforation de la perforation du film.

4. Dispositif d'avancement de film suivant la revendication 1, caractérisé en ce que le déplacement du film (6) par le comportement glissant du film (6) dans le canal de film est déterminé dans la zone de la fenêtre d'image (8).

5. Dispositif d'avancement de film suivant la revendication 4, caractérisé en ce que dans la zone de la fenêtre d'image (8) est prévu un cadre presseur (15) qui est sollicité par des ressorts réglables manuellement et dont la force de pressage peut être donnée au préalable par ces ressorts.

6. Dispositif d'avancement de film suivant l'une quelconque des revendications précédentes, caractérisé en ce que le pas des dents du rouleau denté d'avancement du film (1) est légèrement supérieur au pas de la perforation du film.

7. Dispositif d'avancement de film suivant l'une quelconque des revendications précédentes, caractérisé en ce que l'angle d'enveloppement (µ) du film (6) autour du rouleau denté d'avancement de film (1) est modifiable.

8. Dispositif d'avancement de film suivant la revendication 7, caractérisé en ce que le film (6) est guidé entre un patin à film (7) et le rouleau denté d'avancement de film (1), le patin à film (7) présentant un évidement (70) adapté au rayon du rouleau denté d'avancement de film (1), en ce que la longueur d'un bord de sortie (73) du patin à film (7) peut être modifiée et en ce que le bord de sortie (113) du patin à film (7) peut être rabattu autour d'une articulation (112).

9. Dispositif d'avancement de film suivant l'une quelconque des revendications précédentes, pour un film présentant deux rangées de perforations écartées l'une de l'autre, caractérisé en ce que le pas des dents de seulement une couronne dentée (4 ou 5) du rouleau denté d'avancement de film (1) est modifié par rapport au pas de la perforation du film, de façon que le film (6) soit tendu d'un côté.

10. Dispositif d'avancement de film suivant l'une quelconque des revendications précédentes, pour un film présentant deux rangées de perforations écartées l'une de l'autre, caractérisé en ce que le pas des dents des deux couronnes dentées (4, 5) du rouleau denté d'avancement de film (1) est modifié par rapport au pas de la perforation du film, de façon que le film (6) soit tendu des deux côtés.

11. Dispositif d'avancement de film suivant l'une quelconque des revendications précédentes, pour l'avancement d'un film présentant deux rangées de perforations réparties régulièrement, caractérisé en ce que le rouleau denté d'avancement de film (1) présente deux couronnes dentées (4, 5) qui sont fixées sur un axe et qui sont réglables l'une par rapport à l'autre.
